# EUROPÄISCHE PATENTSCHRIFT

(11) **EP 2 845 296 B1**
(45) Veröffentlichungstag und Bekanntmachung des Hinweises auf die Patenterteilung: **12.08.2020**
(21) Anmeldenummer: 13730145.3
(22) Anmeldetag: 06.06.2013
(51) Int. Cl.: H02K 3/12, H02K 3/28, H02K 3/50, H02K 15/00

(54) **VERRINGERUNG DES ELEKTRISCHEN WIDERSTANDES BEI EINER ELEKTRISCHEN MASCHINE MIT IN NUTEN ANGEORDNETEN WICKLUNGEN**
REDUCTION OF THE ELECTRICAL RESISTANCE FOR AN ELECTRIC MACHINE HAVING WINDINGS ARRANGED IN GROOVES
DIMINUTION DE LA RÉSISTANCE ÉLECTRIQUE POUR UN MOTEUR ÉLECTRIQUE COMPRENANT DES ENROULEMENTS AGENCÉS DANS DES RAINURES

(30) Priorität: 22.06.2012 DE 102012210614
(43) Veröffentlichungstag der Anmeldung: 11.03.2015
(73) Patentinhaber: Siemens Aktiengesellschaft, 80333 München (DE)
(72) Erfinder: CENTNER, Matthias, 10555 Berlin (DE); GELS, Patrick, 14059 Berlin (DE); SCHÄFER, Rüdiger, 13599 Berlin (DE); WASCHEK, Jörg, 14612 Falkensee (DE)
(86) Internationale Anmeldenummer: PCT/EP2013/061672
(87) Internationale Veröffentlichungsnummer: WO 2013/189750

(56) Entgegenhaltungen:
- EP-A1- 2 388 892
- AT-B- 91 774
- DE-A1-102006 021 354
- DE-C- 315 354
- DE-C- 319 567
- DE-C- 613 780
- GB-A- 191 310 919

## Beschreibung

Die Erfindung betrifft eine elektrische Maschine mit Nuten und Wicklungen von elektrischen Leitern, wobei die Wicklungen in Stränge unterteilt sind, wobei zumindest ein Strang jeweils eine Anzahl s in Reihe geschalteter Spulen aufweist, die jeweils in den Nuten angeordnet sind, wobei die Spulen jeweils parallel geschaltete Teilleiter umfassen, wobei die Teilleiter einer Spule jeweils in mehreren Bündeln angeordnet sind, wobei ein Bündel einer Spule jeweils in Reihe mit einem Bündel einer in Reihe geschalteten Spule geschaltet ist, wobei jedes Bündel des zumindest einen Stranges in einer Nut jeweils an einer jeweiligen Bündel-Position in Bezug auf eine tiefstmögliche Bündel-Position in der Nut angeordnet ist, wobei die jeweiligen Bündel-Positionen aller Bündel in allen Spulen des zumindest einen Stranges jeweils eine Anzahl b von möglichen Bündel-Position des zumindest einen Stranges festlegen.

Bei von Wechselstrom durchflossen elektrischen Leitern ist die Stromdichte im Inneren eines Leiters niedriger als an der Oberfläche. Auch bei einer elektrischen Maschine, die in Nuten angeordnete Wicklungen und Windungen aufweist, ist dieser als Stromverdrängung oder Skin-Effekt bekannte Effekt zu beobachten. Insbesondere bei hohen Speisefrequenzen führen diese Stromverdrängungserscheinungen zwischen den Teilleitern (so genannte Stromverdrängung erster Ordnung) zu massiven Zusatzverlusten.

Zur Reduzierung dieser Zusatzverluste, insbesondere bei Spulenwicklungen, wurden bisher folgende Maßnahmen angewandt. Beispielsweise wurde eine Bündelvertauschung vorgenommen, bei der die parallelen Teilleiter in zwei Bündel aufgeteilt werden, wobei das obere und das untere Bündel etwa in der Spulengruppenmitte vertauscht werden. Diese Maßnahme ist sehr ähnlich zur Stabverdrillung bei Stabwicklungen, welche als Röbel-Stab bekannt ist. Alternativ kann auch eine Teilleitertransposition verwendet werden, zu der die Teilleiter an einer bestimmten Stelle, entweder innerhalb einer Spule oder zwischen zwei Spulen einer Spulengruppe, auf kurzem Weg um 180° verdrillt werden.

Eine derartige Vorrichtung ist beispielsweise aus der DE 1 041 148 A bekannt. Dort werden Leiterstäbe als Röbelstäbe ausgeführt, indem bei einem Leiterstab die Teilleiter in zwei Ebenen schräg geführt sind und aus der einen Leiterebene in die andere Leiterebene abgekröpft werden.

Beispielsweise aus der DE 10 2006 021 354 A1, der EP 2 388 892 A1, der AT 91 774 B, der GB 1913 10 919 oder der DE 613 780 sind zusätzlich elektrische Maschinen bekannt, bei welchen einzelne Stränge einer Phase in den verschiedenen Nuten an jeweiligen Nutpositionen angeordnet sind.

Der Erfindung liegt die Aufgabe zugrunde, den elektrischen Widerstand bei einer elektrischen Maschine zu verringern, welche in Nuten angeordnete Wicklungen aufweist und mit Wechselstrom betreibbar ist.

Diese Aufgabe wird durch eine elektrische Maschine der eingangs genannten Art gemäß Anspruch dadurch gelöst, dass die Bündel des zumindest einen Stranges jeweils zwischen den Spulen derart vertauscht werden, dass jedes Bündel des zumindest einen Stranges in den Nuten jeweils zumindest n Mal und höchstens n' Mal an jeder der jeweils möglichen Bündel-Position des zumindest einen Stranges in Bezug auf die jeweils tiefstmögliche Bündel-Position in der Nut angeordnet ist, wobei n der Ganzzahlquotient bezüglich des Quotienten der Anzahl s in Reihe geschalteter Spulen eines Stranges und der Anzahl b von möglichen Bündel-Positionen eines Stranges ist, wobei n'= n, falls s durch b teilbar ist und n'= n+1, falls s nicht durch b teilbar ist.

Durch das derartige Vertauschen der Bündel des zumindest einen Stranges wird gewährleistet, dass jedes Bündel des Stranges möglichst gleich oft an jeder der jeweils möglichen Bündel-Positionen angeordnet ist:
- ist die Anzahl s in Reihe geschalteter Spulen des Stranges ein ganzzahliges Vielfaches der Anzahl b von möglichen Bündel-Positionen des Stranges, so ist jedes Bündel genau gleich oft an jeder der möglichen Bündelpositionen;
- ist die Anzahl s in Reihe geschalteter Spulen des Stranges nicht durch die Anzahl b von möglichen Bündel-Positionen des Stranges teilbar, so ist in jeder der b möglichen Bündel-Positionen zumindest n Mal und höchstens n'= n+1 Mal ein Bündel des Stranges angeordnet, wobei n der Ganzzahlquotient von s bzgl. b ist: Wenn r durch den Rest des Quotienten s/b gegeben ist, ergibt sich, dass sich in r Bündel-Positionen insgesamt n'= n+1 Bündel befinden und in (b-r) Bündel-Positionen insgesamt n Bündel befinden.

Diese Anordnung der Bündel bewirkt, dass sich die jeweiligen Bündel im Vergleich zu den restlichen Bündeln des Stranges und über die gesamte Länge eines Bündels gesehen möglichst gleich weit im Inneren der in den Nuten der elektrischen Maschine angeordneten Wicklungen befinden. Somit lässt sich durch diese Bündel-Anordnung die Stromverdrängung zwischen den elektrischen Leitern der elektrischen Maschine sehr gut reduzieren. Insgesamt weist die elektrische Maschine daher einen geringeren ohmschen Widerstand auf, was Energie beim Betrieb der elektrischen Maschine eingespart.

Die vorgeschlagene Vertauschung der Bündel ist dabei wirkungsvoller als die oben erwähnte, schon bekannte Bündelvertauschung, bei welcher die parallelen Teilleiter je Windung in beispielsweise zwei Bündel aufgeteilt wird, so dass ein oberes und ein unteres Bündel gebildet wird, welche etwa in Spulengruppenmitte vertauscht werden. Aufgrund der deutlich verminderten Zusatzverluste weist die erfindungsgemäße elektrische Maschine also deutlich geringere ohmsche Widerstände als elektrische Maschinen mit der bekannten Bündelvertauschung auf.

Auch im Vergleich zur schon bekannten Teilleitertransposition, bei welcher die Teilleiter auf kurzem Weg um 180° verdrillt werden, weist die erfindungsgemäße elektrische Maschine Vorteile auf, weil die vorgeschlagene Vertauschung der Bündel technisch deutlich einfacher zu realisieren ist.

Vorzugsweise weist die erfindungsgemäße elektrische Maschine drei Stränge auf, welche den drei Stromphasen zugeordnet sind. Dabei kann die vorgeschlagene Vertauschung der Bündel für jeden der Stränge vorgenommen werden, um Stromverdrängungseffekte zwischen den Strängen zu minimieren. Die elektrische Maschine weist weiterhin bevorzugterweise mindestens drei in Reihe geschaltete Spulen pro Strang auf, wobei auch die Anzahl b von möglichen Bündel-Positionen bevorzugterweise mindestens drei beträgt.

Bei einer vorteilhaften Ausgestaltung der Erfindung ist jedes Bündel des zumindest einen Stranges in den Nuten genau gleich oft an jeder der möglichen Bündel-Positionen des zumindest einen Stranges in Bezug auf die tiefstmögliche Bündel-Position in der Nut angeordnet. Somit ist die Anzahl s der in Reihe geschalteten Spulen des Stranges ein ganzzahliges Vielfaches der Anzahl b von möglichen Bündel-Positionen des Stranges. Diese Anordnung der Bündel wirkt der Stromverdrängung besonders gut entgegen, weil sich die Wirkungen der einzelnen Bündel gegenseitig kompensieren. Somit wird ein besonders geringer ohmscher Widerstand der elektrischen Maschine erreicht.

Bei einer weiteren vorteilhaften Ausgestaltung der Erfindung werden die Bündel des zumindest einen Stranges jeweils nach jeder Spule zyklisch vertauscht. Die zyklische Vertauschung der Bündel bietet den Vorteil, dass sie technisch besonders einfach zu realisieren ist.

Beispielsweise kann bei einer elektrischen Maschine mit vier Bündeln eine zyklische Vertauschung der Bündel dadurch erreicht werden, dass zwischen den Spulen die drei untersten Bündel aus einer ersten Nut in die nächste Nut als die drei obersten Bündel eingeführt werden und das oberste Bündel der ersten Nut an den drei zuvor genannten Bündeln vorbei und unter den drei zuvor genannten Bündeln in die nächste Nut eingeführt wird. Im Bereich der Bündel-Vertauschung können die Bündel zwecks verbesserter mechanischer Stabilität und zur Unterdrückung von unerwünschten Schwingungen an einander befestigt werden, beispielsweise durch eine Bandagierung.

Weiterhin ist es möglich, das jeweilige Vertauschen der Bündel zwischen den jeweiligen Nuten möglichst mittig und möglichst symmetrisch in Bezug auf die Enden der Nuten durchzuführen, so dass sich auch während des jeweiligen Vertauschens der Bündel zwischen den Nuten die jeweiligen Bündel im Vergleich zu den restlichen Bündeln des Stranges möglichst gleich weit im Inneren in Bezug auf die übrigen Wicklungen befinden und die Stromverdrängung minimiert wird.

Bei einer weiteren vorteilhaften Ausgestaltung der Erfindung weisen zumindest zwei Stränge jeweils die Anzahl s in Reihe geschalteter Spulen auf, die jeweils in den Nuten angeordnet sind, wobei jede Spule in einer Nut jeweils an einer jeweiligen Spulen-Position in Bezug auf eine tiefstmögliche Spulen-Position in der Nut angeordnet ist, wobei die jeweiligen Spulen-Positionen aller Spulen des jeweiligen Stranges jeweils eine Anzahl p von möglichen Spulen-Positionen des Stranges festlegen, wobei die Spulen-Positionen des jeweiligen Stranges derart vertauscht werden, dass jede Spule des jeweiligen Stranges in den Nuten zumindest m Mal und höchstens (m+1) Mal an jeder der möglichen Spulen-Position des jeweiligen Stranges in Bezug auf die tiefstmögliche Spulen-Position in der Nut angeordnet ist, wobei m der Ganzzahlquotient bezüglich des Quotienten der Anzahl s in Reihe geschalteter Spulen eines Stranges und der Anzahl p von möglichen Spulen-Positionen eines Stranges ist, wobei m'= m, falls s durch p teilbar ist und m'=m+1, falls s nicht durch p teilbar ist.

Durch die Anordnung mehrerer Spulen in einer Nut ergibt sich die Anzahl p von möglichen Spulen-Positionen. Analog zur oben beschriebenen Vertauschung der Bündel und der Bündel-Positionen werden nun die Spulen und die Spulen-Positionen vertauscht. Durch das derartige Vertauschen der Spulen der zumindest zwei Stränge wird gewährleistet, dass jede Spule des jeweiligen Stranges möglichst gleich oft an jeder der jeweils möglichen Spulen-Positionen angeordnet ist.

Diese Anordnung der Spulen bewirkt, dass sich die jeweiligen Spulen über die gesamte Länge des jeweiligen Stranges gesehen möglichst gleich weit im Inneren der Wicklungen befinden. Somit lässt sich durch diese Spulen-Anordnung die zu erhöhten ohmschen Verlusten führende Stromverdrängung zwischen den elektrischen Leitern der elektrischen Maschine noch besser reduzieren. Besonders durch die Kombination der Vertauschung der Bündel mit der Vertauschung der Spulen ergibt sich somit für jedes Bündel jedes Stranges eine ausgesprochen vorteilhafte Leiteranordnung in Bezug auf Stromverdrängungseffekte. Insgesamt weist die elektrische Maschine daher einen besonders geringer ohmschen Widerstand auf, was noch mehr Energie beim Betrieb der elektrischen Maschine einspart.

Bei einer weiteren vorteilhaften Ausgestaltung der Erfindung werden die Spulen-Positionen des jeweiligen Stranges zwischen den Nuten derart vertauscht, dass jede Spulen-Position des jeweiligen Stranges in den Nuten genau gleich oft an jeder der möglichen Spulen-Positionen des jeweiligen Stranges in Bezug auf die tiefstmögliche Spulen-Position in der Nut angeordnet ist. Somit ist die Anzahl s der in Reihe geschalteten Spulen des Stranges ein ganzzahliges Vielfaches der Anzahl p von möglichen Spulen-Positionen eines Stranges. Diese Anordnung der Spulen wirkt der Stromverdrängung besonders gut entgegen, weil die Wirkungen der einzelnen Spulen gegenseitig kompensieren. Somit wird ein besonders geringer ohmscher Widerstand der elektrischen Maschine erreicht.

Bei einer weiteren vorteilhaften Ausgestaltung der Erfindung werden die Spulen-Positionen des jeweiligen Stranges zwischen den Nuten jeweils zyklisch vertauscht. Ähnlich der oben beschriebenen zyklischen Vertauschung der Bündel ist die zyklisehe Vertauschung der Spulen technisch besonders einfach zu bewerkstelligen.

Im Folgenden wird die Erfindung anhand der in den Figuren dargestellten Ausführungsbeispiele näher beschrieben und erläutert. Es zeigen:
- FIG 1: ein Schaltungsschema einer elektrischen Maschine nach Stand der Technik,
- FIG 2: eine erste Ausführungsform eines Schaltungsschemas einer erfindungsgemäßen elektrischen Maschine,
- FIG 3: eine zweite Ausführungsform eines Schaltungsschemas und
- FIG 4: eine räumliche Darstellung einer Vertauschung von Bündeln gemäß einer dritten Ausführungsform.

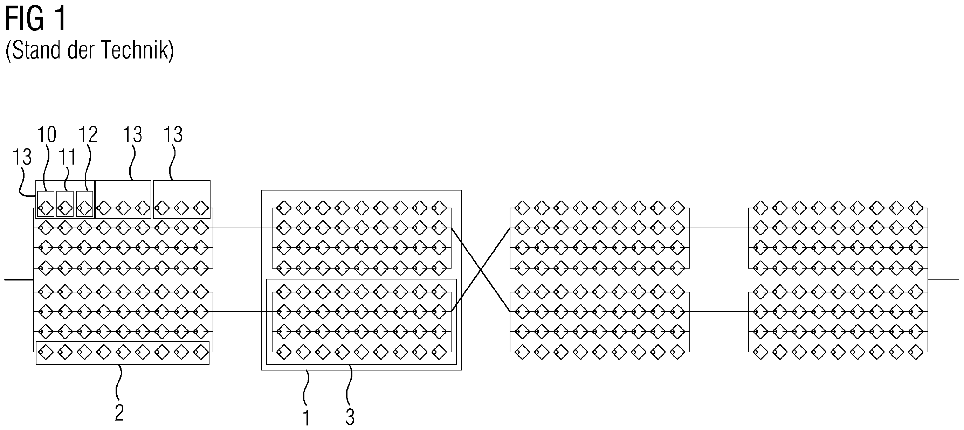

FIG 1 zeigt ein Schaltungsschema einer elektrischen Maschine nach Stand der Technik. Eine Spule 1 besteht aus acht parallel geschalteten Teilleitern 2, wobei vier Teilleiter 2 zu einem Bündel 3 zusammengefasst werden. Jeder Teilleiter 2 weist drei in Reihe geschaltete Windungen 13 auf, welche jeweils wiederum aus einem Hinleiter 10 und einem Rückleiter 12 bestehen, die jeweils über einen Leiter im Wickelkopfbereich 11 verbunden sind.

Das Schaltungsschema nach Stand der Technik zeigt insgesamt vier in Reihe geschaltete Spulen 1. Die verschiedenen Teilleiter 2 jeder Spule 1 sind üblicherweise in eine Nut der elektrischen Maschine eingebracht. Im Folgenden wird angenommen, dass das untere der beiden Bündel 3 einer Spule 1 an der tiefstmöglichen Bündel-Position in einer Nut angeordnet ist. Im Stand der Technik ist bekannt, die Bündel 3 in Spulengruppenmitte zu vertauschen, so dass die Anordnung der Bündel 3 zwischen der ersten Spule 1 und der zweiten Spule 1 sowie zwischen der dritten Spule 1 und der vierten Spule 1 nicht geändert wird. Dagegen wird das obere Bündel 3 bzw. das untere Bündel 3 der zweiten Spule 1 mit dem unteren Bündel 3 bzw. dem oberen Bündel 3 der dritten Spule 1 verbunden, was die eigentliche Bündelvertauschung darstellt. Diese Art der Schaltung ist vergleichbar mit einem Röbel-Stab.

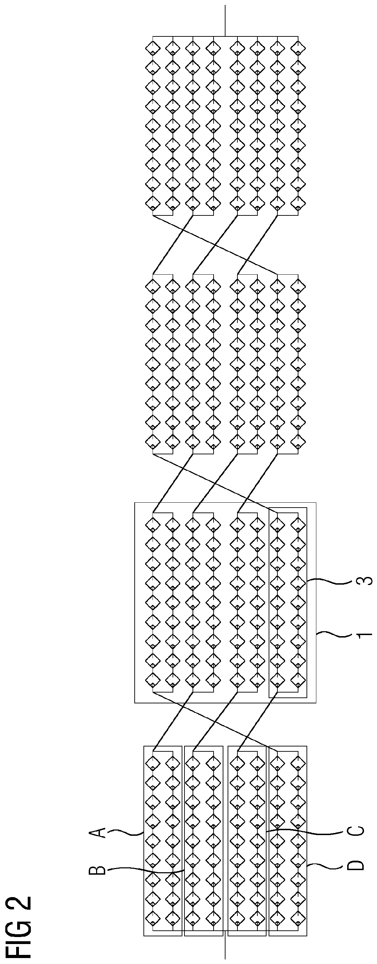

FIG 2 zeigt eine erste Ausführungsform eines Schaltungsschemas einer erfindungsgemäßen elektrischen Maschine. Jede Spule 1 weist wiederum acht Teilleiter 2 auf, welche paarweise zu insgesamt vier Bündeln 3 zusammengefasst werden. Im Folgenden wird angenommen, dass das unterste der vier Bündel 3 der ersten Spule 1 an der tiefstmöglichen Bündel-Position, bezeichnet mit Bündel-Position D, in einer Nut der elektrischen Maschine angeordnet ist. Entsprechend sind das zweitunterste Bündel 3 an Bündel-Position C, das zweitoberste Bündel 3 an Bündel-Position B und das oberste Bündel 3 an Bündel-Position A angeordnet.

Zwischen der ersten Spule 1 und der zweiten Spule 1 werden die Bündel 3 derart vertauscht, dass das Bündel 3, welches in der ersten Spule 1 an Bündel-Position A bzw. B bzw. C bzw. D angeordnet ist, mit dem Bündel 3 der zweiten Spule 1 an Bündel-Position B bzw. C bzw. D bzw. A verbunden ist. Diese Vertauschung wird zwischen den weiteren Spulen 1 wiederholt. Insgesamt ist somit jedes der vier Bündel 3 in den vier Spulen 1 jeweils einmal auf Bündel-Position A, B, C und D angeordnet. Somit befindet sich jedes der Bündel 3 über die gesamte Länge von mehreren in Reihe geschalteten Spulen 1 gleich weit im Inneren der in den Nuten der elektrischen Maschine angeordneten Wicklungen. Dadurch lassen sich Stromverdrängungseffekte der einzelnen Bündel 3 besonders gut gegenseitig kompensieren, wodurch der ohmsche Widerstand der gesamten Schaltung der elektrischen Maschine besonders gering ist.

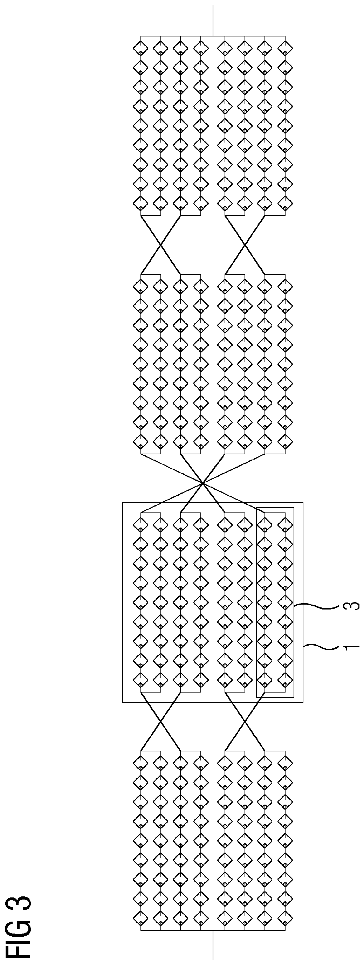

FIG 3 zeigt eine zweite Ausführungsform eines Schaltungsschemas. Wiederum weist jede Spule 1 acht Teilleiter 2 auf, welche paarweise zu insgesamt vier Bündeln 3 zusammengefasst sind, wobei insgesamt vier Spulen 1 in Reihe geschaltet sind. Jeweils im Spulenpaar der ersten und zweiten Spule 1 sowie dem Spulenpaar der dritten und vierten Spule 1 werden die Bündel 3 wie folgt vertauscht: das oberste Bündel 3 der einen Spule 1 des Spulenpaars wird mit dem zweitobersten Bündel 3 der anderen Spule 1 des Spulenpaars verbunden; das unterste Bündel 3 der einen Spule 1 des Spulenpaars wird mit dem zweituntersten Bündel 3 der anderen Spule 1 des Spulenpaars verbunden.

Im Spulenpaar der zweiten und der dritten Spule 1 werden die Bündel 3 derart vertauscht, dass das oberste Bündel 3 der einer Spule 1 des Spulenpaars mit dem untersten Bündel 3 der anderen Spule 1 des Spulenpaars verbunden ist und das zweitoberste Bündel 3 der einen Spule 1 des Spulenpaars mit dem zweituntersten Bündel 3 der anderen Spule 1 des Spulenpaars verbunden ist.

Auch durch diese Art der Vertauschung der Bündel 3 ergibt sich, dass jedes der vier Bündel 3 in den vier Spulen 1 jeweils einmal auf jeder der vier möglichen Bündel-Positionen angeordnet ist. Jedes der Bündel 3 befindet sich über die gesamte Länge von mehreren in Reihe geschalteten Spulen 1 gleich weit im Inneren der in den Nuten der elektrischen Maschine angeordneten Wicklungen, wodurch sich die Stromverdrängungseffekte der einzelnen Spulen 1 besonders gut gegenseitig kompensieren.

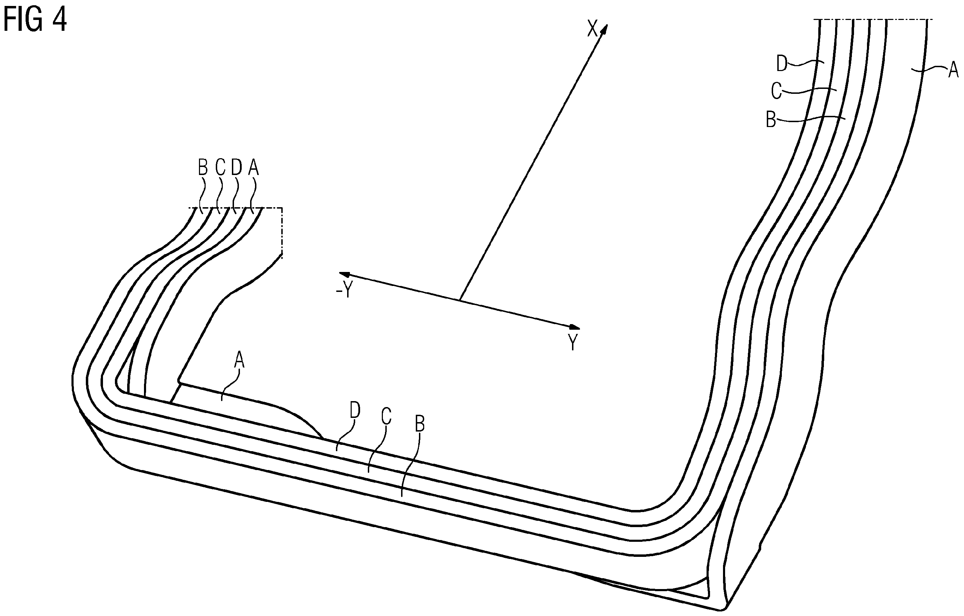

FIG 4 zeigt eine räumliche Darstellung einer Vertauschung von Bündeln gemäß einer dritten Ausführungsform. Eine Nut der elektrischen Maschine erstreckt sich Richtung des Pfeils x. In der Zeichnung oben, also in positiver y-Richtung, befindet sich das Ende einer ersten Spule 1, das aus einer Nut der elektrischen Maschine herausragt und vier Bündel 3 aufweist. Die positive y-Richtung weist bezüglich der Mitte der Leiteranordnung der elektrischen Maschine, welche sich bei y=0 befindet, von innen nach außen, so dass die vier Bündel 3 von innen nach außen in der Reihenfolge von Bündel-Positionen (D, C, B, A) angeordnet sind. Auch die negative y-Richtung weist von der Mitte der Leiteranordnung aus betrachtet nach außen. Unten, also in negativer y-Richtung, befindet sich das Ende einer zweiten Spule 1, das aus einer weiteren Nut der elektrischen Maschine herausragt und wiederum vier Bündel 3 aufweist. Die vier Bündel 3 der ersten Spule 1 werden in einer U-Form umgelenkt und mit den vier Bündeln 3 der zweiten Spule 1 verbunden.

Zwischen der ersten Spule 1 und der zur ersten Spule 1 in Reihe geschalteten zweiten Spule 1 werden die Bündel 3 wie folgt vertauscht, wobei sich die Bezeichnungen der Bündel-Positionen (A, B, C und D) jeweils nur auf die Bündel-Positionen in der ersten Spule 1 beziehen. Am Ausgang der ersten Spule 1 sind vier Bündel 3 von innen nach außen betrachtet in der Reihenfolge von Bündel-Positionen (D, C, B, A) angeordnet. Der Block der drei Bündel 3 der Bündel-Positionen (D, C, B) bleibt erhalten und wird in einer U-Form umgelenkt und innerhalb des Blocks in der Reihenfolge (D, C, B) von innen nach außen mit den jeweiligen Bündeln 3 der zweiten Spule 1 verbunden. Das Bündel 3 der ursprünglichen Bündel-Position A der ersten Spule 1 wird derart umgelenkt, dass sich die Position des Bündels 3 ändert: nach der ersten Spule 1 ganz außen angeordnet, wird das Bündel 3 mit dem Bündel 3 der zweiten Spule 1 verbunden, welches ganz innen liegt.

Von innen nach außen betrachtet wird somit die Reihenfolge (D, C, B, A) der vier Bündel 3 nach der ersten Spule 1 geändert in die Reihenfolge (A, D, C, B), so dass eine zyklische Vertauschung realisiert wurde. Diese Vertauschung wird zwischen den weiteren Spulen 1 wiederholt.

Zusammenfassend betrifft die Erfindung eine elektrische Maschine mit Nuten und Wicklungen von elektrischen Leitern, wobei die Wicklungen in Stränge unterteilt sind, wobei zumindest ein Strang jeweils eine Anzahl s in Reihe geschalteter Spulen aufweist, die jeweils in den Nuten angeordnet sind, wobei die Spulen jeweils mindestens zwei parallel geschaltete Teilleiter umfassen, wobei die Teilleiter einer Spule jeweils in mehreren Bündeln angeordnet sind, wobei ein Bündel einer Spule jeweils in Reihe mit einem Bündel einer in Reihe geschalteten Spule geschaltet ist, wobei jedes Bündel des zumindest einen Stranges in einer Nut jeweils an einer jeweiligen Bündel-Position in Bezug auf eine tiefstmögliche Bündel-Position in der Nut angeordnet ist, wobei die jeweiligen Bündel-Positionen aller Bündel in allen Spulen des zumindest einen Stranges jeweils eine Anzahl b von möglichen Bündel-Positionen des zumindest einen Stranges festlegen. Um den elektrischen Widerstand bei einer elektrischen Maschine zu verringern, welche in Nuten angeordnete Wicklungen aufweist und mit Wechselstrom betreibbar ist, wird vorgeschlagen, dass die Bündel des zumindest einen Stranges jeweils zwischen den Spulen derart vertauscht werden, dass jedes Bündel des zumindest einen Stranges in den Nuten jeweils zumindest n Mal und höchstens n' Mal an jeder der jeweils möglichen Bündel-Position des zumindest einen Stranges in Bezug auf die jeweils tiefstmögliche Bündel-Position in der Nut angeordnet ist, wobei n der Ganzzahlquotient bezüglich des Quotienten der Anzahl s in Reihe geschalteter Spulen eines Stranges und der Anzahl b von möglichen Bündel-Positionen eines Stranges ist, wobei n'=n, falls s durch b teilbar ist und n'=n+, falls s nicht durch b teilbar ist.

## Patentansprüche

1. Elektrische Maschine mit Nuten und Wicklungen von elektrischen Leitern,
wobei die Wicklungen in Stränge unterteilt sind,
wobei zumindest ein Strang jeweils eine Anzahl s in Reihe geschalteter Spulen (1) aufweist, die jeweils in den Nuten angeordnet sind,
wobei die Spulen (1) jeweils Z mindestens zwei parallel geschaltete Teilleiter (2) umfassen,
wobei die Teilleiter (2) einer Spule (1) jeweils in mehreren Bündeln (3) angeordnet sind,
wobei ein Bündel (3) einer Spule (1) jeweils in Reihe mit einem Bündel (3) einer in Reihe geschalteten Spule (1) geschaltet ist,
wobei jedes Bündel (3) des zumindest einen Stranges in einer Nut jeweils an einer jeweiligen Bündel-Position in Bezug auf eine tiefstmögliche Bündel-Position in der Nut angeordnet ist,
wobei die jeweiligen Bündel-Positionen aller Bündel (3) in allen Spulen (1) des zumindest einen Stranges jeweils eine Anzahl b von möglichen Bündel-Positionen des zumindest einen Stranges festlegen,
**dadurch gekennzeichnet, dass** die Bündel (3) des zumindest einen Stranges jeweils zwischen den Spulen (1) derart vertauscht werden, dass jedes Bündel (3) des zumindest einen Stranges in den Nuten jeweils zumindest n Mal und höchstens n' Mal an jeder der jeweils möglichen Bündel-Position des zumindest einen Stranges in Bezug auf die jeweils tiefstmögliche Bündel-Position in der Nut angeordnet ist,
wobei n der Ganzzahlquotient bezüglich des Quotienten der Anzahl s in Reihe geschalteter Spulen (1) eines Stranges und der Anzahl b von möglichen Bündel-Positionen eines Stranges ist,
wobei n'=n, falls s durch b teilbar ist und
n'=n+1, falls s nicht durch b teilbar ist.

2. Elektrische Maschine nach Anspruch 1,
wobei jedes Bündel (3) des zumindest einen Stranges in den Nuten genau gleich oft an jeder der möglichen Bündel-Positionen des zumindest einen Stranges in Bezug auf die tiefstmögliche Bündel-Position in der Nut angeordnet ist.

3. Elektrische Maschine nach einem der vorhergehenden Ansprüche,
wobei die Bündel (3) des zumindest einen Stranges jeweils nach jeder Spule (1) zyklisch vertauscht werden.

4. Elektrische Maschine nach einem der vorhergehenden Ansprüche,
wobei zumindest zwei Stränge jeweils die Anzahl s in Reihe geschalteter Spulen (1) aufweisen, die jeweils in den Nuten angeordnet sind,
wobei jede Spule (1) in einer Nut jeweils an einer jeweiligen Spulen-Position in Bezug auf eine tiefstmögliche Spulen-Position in der Nut angeordnet ist,
wobei die jeweiligen Spulen-Positionen aller Spulen (1) des jeweiligen Stranges jeweils eine Anzahl p von möglichen Spulen-Positionen des Stranges festlegen,
wobei die Spulen-Positionen des jeweiligen Stranges derart vertauscht werden, dass jede Spule (1) des jeweiligen Stranges in den Nuten zumindest m Mal und höchstens (m+1) Mal an jeder der möglichen Spulen-Position des jeweiligen Stranges in Bezug auf die tiefstmögliche Spulen-Position in der Nut angeordnet ist,
wobei m der Ganzzahlquotient bezüglich des Quotienten der Anzahl s in Reihe geschalteter Spulen (1) eines Stranges und der Anzahl p von möglichen Spulen-Positionen eines Stranges ist,
wobei m'=m, falls s durch b teilbar ist und
m'=m+1, falls s nicht durch b teilbar ist.

5. Elektrische Maschine nach Anspruch 4,
wobei die Spulen-Positionen des jeweiligen Stranges zwischen den Nuten derart vertauscht werden, dass jede Spulen-Position des jeweiligen Stranges in den Nuten genau gleich oft an jeder der möglichen Spulen-Positionen des jeweiligen Stranges in Bezug auf die tiefstmögliche Spulen-Position in der Nut angeordnet ist.

6. Elektrische Maschine nach einem der Ansprüche 4 oder 5,
wobei die Spulen-Positionen des jeweiligen Stranges zwischen den Nuten jeweils zyklisch vertauscht werden.

## Claims

1. Electric machine having grooves and windings of electrical conductors,
wherein the windings are divided into strands,
wherein at least one strand has a respective number s of coils (1) connected in series, which are each arranged in the grooves,
wherein the coils (1) each comprise at least two sub-conductors (2) connected in parallel,
wherein the sub-conductors (2) of a coil (1) are in each case arranged in a plurality of bundles (3),
wherein a bundle (3) of a coil (1) is in each case connected in series to a bundle (3) of a coil (1) connected in series, wherein each bundle (3) of the at least one strand in a groove is in each case, at a respective bundle position in relation to a deepest possible bundle position, arranged in the groove, wherein the respective bundle positions all bundles (3) in all coils (1) of the at least one strand in each case define a respective number b of possible bundle positions of the at least one strand,
**characterised in that**
the bundles (3) of the at least one strand are in each case interchanged between the coils (1) in such a way that each bundle (3) of the at least one strand is in each case arranged in the grooves at least n times and at most n' times at each respective possible bundle position of the at least one strand in relation to the respective deepest possible bundle position in the groove,
wherein n is the integer quotient with regard to the quotient of the number s of coils (1) of a strand connected in series and the number b of possible bundle positions of a strand, wherein n'=n if s is divisible by b and
n'=n+1 if s is not divisible by b.

2. Electric machine according to claim 1,
wherein each bundle (3) of the at least one strand in the grooves is arranged exactly equally frequently at each of the possible bundle positions of the at least one strand in relation to the deepest possible bundle position in the groove.

3. Electric machine according to one of the preceding claims,
wherein the bundles (3) of the at least one strand are in each case cyclically interchanged after each coil (1).

4. Electric machine according to one of the preceding claims,
wherein at least two strands in each case has the respective number s of coils (1) connected in series, which are each arranged in the grooves,
wherein each coil (1) is arranged in a groove in each case at a respective coil position in relation to a deepest possible coil position in the groove,
wherein the respective coil positions of all coils (1) of the respective strand define a respective number p of possible coil positions of the strand,
wherein the coil positions of the respective strand are interchanged in such a way that each coil (1) of the respective strand is arranged in the grooves at least m times and at most (m+1) times at each possible coil position of the respective strand in relation to the deepest possible coil position in the groove,
wherein m the integer quotient with regard to the quotient of the number s coils (1) of a strand connected in series and the number p of possible coil positions of a strand,
wherein m'=m if s is divisible by b and
m'=m+1 if s is not divisible by b.

5. Electric machine according to claim 4,
wherein the coil positions of the respective strand are interchanged between the grooves in such a way that each coil position of the respective strand in the grooves is arranged exactly equally frequently at each of the possible coil positions of the respective strand in relation to the deepest possible coil position in the groove.

6. Electric machine according to one of claims 4 or 5, wherein the coil positions of the respective strand are in each case cyclically interchanged between the grooves.

## Revendications

1. Machine électrique ayant des encoches et des enroulements de conducteurs électriques,
dans laquelle les enroulements sont subdivisés en branches, dans laquelle au moins une branche a, respectivement, un nombre s de bobines (1) montées en série, qui sont disposées, respectivement, dans les encoches,
dans laquelle les encoches (1) comprennent chacune au moins deux conducteurs (2) partiels montés en parallèle,
dans laquelle les conducteurs (2) partiels d'une bobine (1) sont disposés, respectivement, en plusieurs faisceaux (3),
dans laquelle un faisceau (3) d'une bobine (1) est monté, respectivement, en série avec un faisceau (3) d'une bobine (1) montée en série,
dans laquelle chaque faisceau (3) d'au moins une branche est disposé dans une encoche, respectivement, en une position respective de faisceau par rapport à une position de faisceau la plus profonde possible dans l'encoche,
dans laquelle les positions respectives de faisceau de tous les faisceaux (3), dans toutes les bobines (1) d'au moins une branche, fixent, respectivement, un nombre b de positions possibles de faisceau de la au moins une branche,
**caractérisée en ce que**
les faisceaux (3) d'au moins une branche sont échangés, respectivement, entre les bobines (1), de manière à ce que chaque faisceau (3) d'au moins une branche soit disposé dans les encoches, respectivement, au moins n fois et au plus n' fois en chacune des positions de faisceau possibles, respectivement, de la au moins une branche par rapport à la position de faisceau respective la plus profonde possible dans l'encoche,
dans laquelle n est le quotient en nombre entier se rapportant au quotient du nombre s de bobines (1) montées en série d'une branche et par le nombre b des positions de faisceau possibles d'une branche,
dans laquelle n'=n, si s est divisible par b et
n'=n+1, si s n'est pas divisible par b.

2. Machine électrique suivant la revendication 1,
dans laquelle chaque faisceau (3) d'au moins une branche est disposé dans les encoches exactement aussi souvent en chacune des positions de faisceau possibles de la au moins une branche par rapport à la position de faisceau la plus profonde possible dans l'encoche.

3. Machine électrique suivant l'une des revendications précédentes,
dans laquelle les faisceaux (3) de la au moins une branche sont échangés cycliquement, respectivement, après chaque bobine (1).

4. Machine électrique suivant l'une des revendications précédentes,
dans laquelle au moins deux branches ont, respectivement, le nombre s de bobines (1) montées en série, qui sont disposées chacune dans les encoches,
dans laquelle chaque bobine (1) dans une encoche est disposée, respectivement, en une position de bobines respectives par rapport à une position de bobine la plus profonde possible dans l'encoche,
dans laquelle les positions respectives de bobine de toutes les bobines (1) de la branche respective fixent, respectivement, un nombre p de positions de bobine possibles de la branche,
dans laquelle les positions de bobine de la branche respective sont échangées, de manière à ce que chaque bobine (1) de la branche respective soit disposée dans les encoches au moins n fois et au plus m fois et au plus (m+1 ) fois en chacune des positions de bobine possibles de la branche respective par rapport à la position de bobine la plus profonde possible dans l'encoche,
dans laquelle m est le quotient en nombre entier se rapportant au quotient du nombre s de bobines (1) montées en série d'une branche par le nombre p de positions de bobine possibles d'une branche,
dans laquelle m'=m, si s est divisible par b et
m'=m+1, si s n'est pas divisible par b.

5. Machine électrique suivant la revendication 4,
dans laquelle les positions de bobine de la branche respective sont échangées entre les encoches, de manière à ce que chaque position de bobine de la branche respective dans les encoches soit disposée exactement aussi souvent en chacune des positions de bobine possibles de la branche respective par rapport à la position de bobine la plus profonde possible dans l'encoche.

6. Machine électrique suivant l'une des revendications 4 ou 5,
dans laquelle les positions de bobine de la branche respective sont échangées, respectivement, cycliquement entre les encoches.
